# EUROPÄISCHE PATENTANMELDUNG

(11) **EP 4 782 201 A1**
(43) Veröffentlichungstag der Anmeldung: **29.07.2026**
(21) Anmeldenummer: 25153892.2
(22) Anmeldetag: 24.01.2025
(51) Int. Cl.: B32B 5/18, B32B 3/26, B32B 3/30

(54) **SANDWICHELEMENT, HERSTELLUNGSVERFAHREN UND KABINENELEMENT**

(71) Anmelder: AIRBUS Operations GmbH, 21129 Hamburg (DE)
(72) Erfinder: Buettemeyer, Holger, 21129 Hamburg (DE); Müller, Lisa, 21129 Hamburg (DE); Witte, Tassilo, 21129 Hamburg (DE)
(74) Vertreter: Airbus Germany

(57) **Zusammenfassung**

Offenbart sind ein Sandwichelement mit einem Schaumkern, der an seinen zueinander entgegengesetzten Großflächen zumindest jeweils eine Decklage aufweist, wobei in die eine Großfläche des Schaumkern Vertiefungen eingebracht sind und die zumindest eine sich über diese Großfläche erstreckende Decklage mit Öffnungen versehen ist, die sich zumindest teilweise in Überdeckung mit den Vertiefungen befinden, ein Herstellungsverfahren sowie ein Kabinenelement.

## Beschreibung

Die Erfindung betrifft ein Sandwichelement, ein Verfahren zur Herstellung eines derartigen Sandwichelementes und ein Kabinenelement für eine Flugzeugkabine.

Kabinenelemente wie Seitenverkleidungen, Decken, Fußböden, Trennwänden, Compartmentwänden von Flugzeugkabinen bestehen regelmäßig aus Sandwichelementen. Bekannte Sandwichelemente haben einen Wabenkern, eine vordere Decklage sowie eine hintere Decklage. Die Decklagen bestehen aus einer glasfaserverstärkten phenolbasierten Harzmatrix. Derartige Sandwichelemente zeichnen sich durch eine hohe Stabilität bei einem geringen Gewicht aus. Nachteilig ist jedoch deren begrenzte schallreduzierende Wirkung, so dass bei der Verwendung als Seitenverkleidung verhältnismäßig viel Schallschutzmaterial angeordnet werden muss, um zum Beispiel Triebwerkslärm zu reduzieren.

Aufgabe der Erfindung ist es, ein Sandwichelement, das den vorgenannten Nachteil beseitigt, ein fertigungstechnisch einfaches Verfahren zur Herstellung eines derartigen Sandwichelementes und ein Kabinenelement mit einem verbesserten Schallschutz zu schaffen.

Diese Aufgabe wird gelöst durch ein Sandwichelement mit den Merkmalen des Patentanspruchs 1, durch ein Verfahren mit den Merkmalen des Patentanspruchs 8 und durch ein Kabinenelement mit den Merkmalen des Patentanspruchs 9.

Ein erfindungsgemäßes Sandwichelement, zum Beispiel für ein Kabinenelement in einem Flugzeug, hat einen Schaumkern, der an seinen zueinander entgegengesetzten Großflächen zumindest jeweils eine Decklage aufweist. In die eine Großfläche des Schaumkerns sind Vertiefungen eingebracht, die sich in das Innere des Schaumkern erstrecken. Die zumindest eine auf der Großfläche mit den Vertiefungen aufgebrachte Decklage ist mit Öffnungen versehen, die sich zumindest teilweise in Überdeckung mit den Vertiefungen befinden.

Dadurch, dass der Sandwichkern ein Schaumkern und somit aus einem Schaumstoff besteht bzw. ein Schaumkörper ist, weist das Sandwichelement eine gute innewohnende Schallreduzierung auf, so dass zusätzliche Schallschutzmaßnahmen entfallen bzw. im Vergleich zu herkömmlichen Sandwichelementen mit einem Wabenkern reduziert werden können. Durch die zumindest abschnittsweise Öffnung der Vertiefungen nach außen wird die schallreduzierende Wirkung verbessert, da ein den Schallschutz begünstigendes Volumen-Oberflächenverhältnis vergrößert wird.

Dadurch, dass der Schaumkern Vertiefungen aufweist, reduziert sich das Gewicht des Sandwichelements. Die Vertiefungen sind derart angeordnet, dass die Stabilität des Sandwichelements je nach Einsatzort bzw. Verwendung gewährleistet ist. Beispielhafte Formen sind Sacklöcher, gerade Rillen (nicht durchgehende Langlöcher), geschwungene Rillen, Kombinationen von Löchern und Rillen und dergleichen.

Bei einem Ausführungsbeispiel ist ein Öffnungsmuster der zumindest einen Decklage gleich einem Vertiefungsmuster des Schaumkerns und zu diesem fluchtend ausgerichtet. Hierdurch sind die Vertiefungen mündungsseitig maximal geöffnet.

Bei einem alternativen Ausführungsbeispiel ist die zumindest eine Decklage netzartig bzw. perforiert. Eine solche Decklage hat eine Vielzahl von Netzmaschen als Öffnungen bzw. Perforationen. Durch die Netzstruktur bzw. Perforation der Decklage wird die Herstellung des Sandwichelements vereinfacht, da eine solche Decklage nicht zu den Vertiefungen ausgerichtet werden muss.

Zur individuellen Einstellung des Schallschutzes, des Gewichtes sowie der Stabilität des Sandwichelementes können innerhalb eines Schaumkerns die Vertiefungen (sowie die Öffnungen) unterschiedliche Geometrien (Formen), Größen und/oder Tiefen haben.

Der Schallschutz lässt sich weiter verbessern, wenn der Schaumkern zumindest im Bereich der Vertiefungen offenporig bzw. grobporig ist, da hierdurch die wirksame "schallschluckende" Oberfläche weiter vergrößert wird. Grundsätzlich sind offenporige oder geschlossene Schaumkerne verwendbar. Vorstellbar ist auch ein Schaumkern, mit variierender Porigkeit. Zum Beispiel kann der Schaumkern im Bereich seiner Vorder- und Rückseite eine geschlossene Schaumkernstruktur aufweisen und im restlichen Schaumkernbereich, insbesondere im Bereich der Vertiefungen, eine offenporige Schaumkernstruktur. Durch die geschlossenen Oberflächen wird die Haftung der Decklagen und die Stabilität des Schaumkerns verbessert, wohingegen durch die Offenporigkeit im Bereich der Vertiefungen die schallreduzierende Wirkung verbessert wird.

Bei einem Ausführungsbeispiel weist der Schaumkern Zonen mit unterschiedlichen Dichten auf. Durch diese Maßnahme lässt sich sowohl die Stabilität gezielt einstellen, als auch der Schallschutz optimieren. Vorstellbar ist zum Beispiel, dass der Schaumkern entlang von Lastpfaden eine höhere Dichte aufweist als außerhalb von Lastpfaden, oder dass der Schaumkern im Bereich der Vertiefungen eine höhere Dichte aufweist als im vertiefungsfreien Schaumkernbereich oder andersherum.

Die Decklagen und der Schaumkern haben bevorzugterweise die gleiche Werkstoffbasis. Dadurch, dass der Schaumkern und die Decklagen auf dem gleichen Werkstoff bzw. Material basieren, herrscht kein Materialmix vor, so dass sich das Sandwichelement gut recyclen lässt. Beispielsweise sind der Schaumkern und die Decklagen auf Basis thermoplastischer Polymere/Werkstoffe. Bevorzugterweise sind die Decklagen sogenannte Organo-Sheets mit einer thermoplastischen Matrix, in die Verstärkungsfasern wie Kohlenstofffasern oder Glasfasern eingebettet sind. Beispielhafte Materialien für die Decklagen und den Schaumkern sind Polyethersuflon (PESU) und Polyetherimid (PEI). Entscheidend für die Wahl des Materials/Werkstoffs ist, dass der Werkstoff luftfahrttechnische Sicherheitsstandards beispielsweise hinsichtlich Entflammbarkeit erfüllt.

Bei einem erfindungsgemäßen Verfahren zur Herstellung eines erfindungsgemäßen Sandwichelements werden die Vertiefungen durch ein spanabhebendes Verfahren in den ausgehärteten Schaumkern eingebracht. Alternativ werden die Vertiefungen integral bei der Herstellung des Schaumkerns in diesen eingebracht.

Ein solches Verfahren ermöglicht eine einfache und definierte Einbringung der Vertiefungen. Im Unterschied zur alternativen Einbringung der Vertiefung direkt bei der Herstellung des Schaumkerns kann ein Werkzeug zur Herstellung des Schaumkerns verwendet werden und dann ein beliebiges Vertiefungsmuster nachträglich eingebracht werden. Wenn das Vertiefungsmuster während der Schaumkernherstellung in den Schaumkern eingebracht wird, ist für jedes Vertiefungsmuster ein individuelles Werkzeug notwendig, allerdings entfällt die nachträgliche Mustereinbringung.

Bei einem Ausführungsbeispiel werden in einem ersten Schritt die Vertiefungen in den Schaumkern eingebracht, dann in einem zweiten Schritt die zumindest eine Decklage auf den Schaumkern aufgebracht und anschließend in einem dritten Schritt die Vertiefungen durch Einbringung der entsprechenden Öffnungen in die zumindest eine Decklage wieder geöffnet.

Bei einem weiteren Ausführungsbeispiel werden zuerst die Vertiefungen in den Schaumkern und davon getrennt die korrespondierenden Öffnungen in den zumindest eine Decklage eingebracht. Danach wird die Decklage mit ihrem Öffnungsmuster fluchtend zu dem Vertiefungsmuster auf dem Schaumkern angeordnet. Dadurch, dass die Öffnungen im Vorfeld in die Decklage eingebracht werden, kann keine Verzerrung/Verschiebung der Decklage beim Einbringen der Öffnungen bzw. Vertiefungen erfolgen.

Bei einem alternativen Ausführungsbeispiel wird in einem ersten Schritt die zumindest eine Decklage auf der einen Großfläche des Schaumkern angeordnet. In einem zweiten Schritt werden dann die Vertiefungen durch die zumindest eine Decklage hindurch in den Schaumkern eingebracht. Eine gesonderte Ausrichtung der Decklagenöffnungen zu den Vertiefungen entfällt.

Bei einem weiteren alternativen Ausführungsbeispiel werden in einem ersten Schritt die Vertiefungen in die eine Großfläche des Schaumkerns eingebracht und dann zumindest eine netzartige bzw. perforierte Decklage auf dieser Großfläche angeordnet. Eine gesonderte Ausrichtung der Netzmaschen bzw. Perforation entfällt aufgrund von deren Vielzahl.

Die zumindest eine Decklage auf der entgegengesetzten, vertiefungsfreien Großfläche wird jeweils bevorzugterweise nach Fertigstellung der Öffnungen bzw. Vertiefungen aufgebracht, um deren unbeabsichtigte Beschädigungen zu vermeiden.

Ein erfindungsgemäßes Kabinenelement weist ein erfindungsgemäßes Sandwichelement auf. Die Vertiefungen sind zur Primärstruktur des Flugzeugs hin zumindest abschnittsweise geöffnet. Ein bevorzugtes Beispiel ist ein Seitenverkleidungselement, zumindest triebwerksnah bzw. APU-nah, da hier ein hoher Schallpegel vorherrscht. Dadurch, dass die Vertiefungen zur Primärstruktur hin mit ihren Mündungen orientiert sind, sind sie zur Schallquelle hin orientiert, wodurch sie ihre schallreduzierende Wirkung voll entfalten können.

Es ist auch vorstellbar, im Bereich der ersten Klasse durch Verwendung der erfindungsgemäßen Seitenverkleidung eine bessere Schallreduzierung zu schaffen. Generell hat die Verwendung des Sandwichelements als Seitenverkleidungselement den Vorteil, dass deren mit den Vertiefungen versehene Großfläche (hier die Rückseite) für die Passagiere nicht sichtbar ist, da sie zum einen an der von der Kabine rückwärtigen Strukturseite des Flugzeugrumpfes angeordnet ist.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Abbildungen näher erläutert. Es zeigen:
- Figur 1: einen Querschnitt durch ein erstes Ausführungsbeispiel erfindungsgemäßes Sandwichelement als Seitenverkleidungselement einer Flugzeugkabine,
- Figur 2: eine Rückansicht eines zweiten Ausführungsbeispiels des erfindungsgemäßen Sandwichelements,
- Figur 3: eine Rückansicht eines dritten Ausführungsbeispiels des erfindungsgemäßen Sandwichelements,
- Figur 4: eine Rückansicht eines vierten Ausführungsbeispiels des erfindungsgemäßen Sandwichelements und
- Figur 5: eine Rückansicht eines fünften Ausführungsbeispiels des erfindungsgemäßen Sandwichelements.

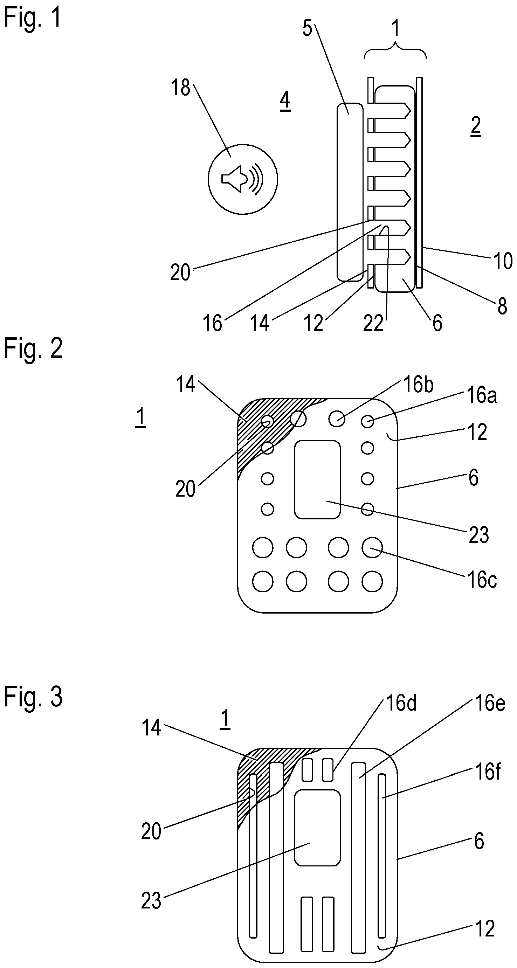

In Figur 1 ist ein Querschnitt durch ein erstes Ausführungsbeispiel erfindungsgemäßes Sandwichelement 1 als Seitenverkleidungselement einer Flugzeugkabine gezeigt. Es grenzt in seiner Funktion als Seitenverkleidungselement eine vordere Flugzeugkabine 2 von einem Rückraum 4 zur Primärstruktur des Flugzeugrumpfes ab. Rückseitig des Sandwichelements 2 ist ein plattenförmiges Schallschutzelement 5 positioniert.

Das Sandwichelement 1 hat einen Schaumkern 6, der an seiner der kabinenzugewandten Großfläche 8 (im Folgenden Vorderseite 8) mit zumindest einer vorderen Decklage 10 und an seiner der Primärstruktur zugewandten Großfläche 12 (im Folgenden Rückseite 12) mit zumindest einer hinteren Decklage 14 versehen ist. Die Decklagen 10, 14 erstrecken sich über die gesamte Vorderseite 8 bzw. Rückseite 12 und basieren bei diesem Ausführungsbeispiel auf dem gleichen Werkstoff wie der Schaumkern. Alternative Ausführungsbeispiele sehen jedoch auch variierende Grundwerkstoffe von dem Schaumkern 6 und den Decklagen 10, 14 vor. Insbesondere können auch die Decklagen 10, 14 untereinander auf unterschiedlichen Grundwerkstoffen bestehen und somit optimal ihrer jeweiligen Bestimmung (zum Beispiel Ausrichtung zur Passagierkabine bzw. von der Schallquelle abgewandt oder von der Passagierkabine abgewandt bzw. der Schallquelle zugewandt) angepasst sein.

Die Decklagen 10, 14 sind bevorzugterweise sogenannte Organo-Sheets mit einer thermoplastischen Matrix, in die Verstärkungsfasern wie Kohlenstofffasern oder Glasfasern eingebettet sind. Der Schaumkern 6 besteht aus einem thermoplastischen Schaumstoff. Die Größe an sich, die Dicke (Erstreckung von der Vorderseite 8 zur Rückseite 12), die Porigkeit und die Dichte bzw. Zonen mit unterschiedlichen Dichten des Schaumkerns werden je nach Anwendungsfall im Herstellungsprozess individuell eingestellt.

Das Sandwichelement 1 hat eine Vielzahl von rückseitigen Vertiefungen 16. Die Vertiefungen 16 erstrecken sich durch die Rückseite 12 des Schaumkerns 6 in Richtung der Vorderseite 8 ohne diese zu durchbrechen. In dem hier gezeigten ersten Ausführungsbeispiel sind sie als Sacklöcher ausgebildet und über die gesamte Rückseite 12 verteilt. Ihre Geometrie (Form), ihre Verteilung und ihre Tiefe richtet sich nach dem jeweiligen Anwendungsfall und der damit einhergehenden geforderten Stabilität bzw. möglichen Lastpfaden. Die Vertiefungen 16 sind so gewählt und gesetzt, dass sie keine strukturelle Schwächung des Kabinenelements bewirken.

Um die Vertiefungen 16 zum Rückraum und somit zur Schallquelle 18 zu öffnen, weist die hintere Decklage 14 ein korrespondierendes Öffnungsmuster einer entsprechenden Anzahl von Öffnungen 20 auf. Die Öffnungen 20 sind hier fluchtend zu den Vertiefungen 16 ausgerichtet. Sie weisen den gleichen Innendurchmesser auf, so dass ein Öffnungsquerschnitt der Öffnungen 20 gleich einem Mündungsquerschnitt der Vertiefungen 16 ist.

Eine beispielsweise Schallquelle 18 ist ein Flugzeugtriebwerk. Der Schall tritt durch die Öffnungen 20 in die Vertiefungen 16 ein und wird so in Kombination mit dem Schaumstoff des Schaumkerns 6 zumindest stark reduziert. Vorteilhafterweise sind die Innenwandungen 22 der Vertiefungen 16 offenporig bzw. grobporig, um eine Wirkfläche zur Schallreduzierung zu vergrößern.

In Figur 2 ist eine Rückansicht (hintere Draufsicht) eines zweiten Ausführungsbeispiels des erfindungsgemäßen Sandwichelements 1 illustriert, bei dem Vertiefungen 16 (hier: 16a, 16b, 16c) bevorzugterweise über die gesamte Rückseite 12 des Schaumkerns 6 verteilt sind. Das Sandwichelement 1 ist wie durch einen Fensterausschnitt 23 angedeutet, ein Seitenverkleidungselement. Im Unterschied zum ersten Ausführungsbeispiel sind die Vertiefungen 16 in einigen Bereichen des Sandwichelements 1 mit einem kleineren Innendurchmesser als in anderen Bereichen des Sandwichelements 1 versehen (kleiner Innendurchmesser siehe Vertiefungen 16a, mittlerer Innendurchmesser siehe Vertiefungen 16b, großer Innendurchmesser siehe Vertiefungen 16c). Die zumindest eine hintere Decklage 14 ist mit einem korrespondierenden Öffnungsmuster versehen.

In Figur 3 ist eine Rückansicht (hintere Draufsicht) eines dritten Ausführungsbeispiels des erfindungsgemäßen Sandwichelements 1 gezeigt. Im Unterschied zum ersten Ausführungsbeispiel und zum zweiten Ausführungsbeispiel sind rückseitige Vertiefungen 16 (hier: 16d, 16e, 16f) als gerade Rillen zumindest mit unterschiedlichen Breiten und Längen ausgebildet. Selbstverständlich sind je nach Anwendungsfall auch gebogene bzw. geschwungene Rillen sowie unterschiedliche Tiefen der Rillen vorstellbar. Die zumindest eine hintere Decklage 14 ist wie beim ersten Ausführungsbeispiel und bei dem zweiten Ausführungsbeispiel mit einem korrespondierenden Öffnungsmuster versehen.

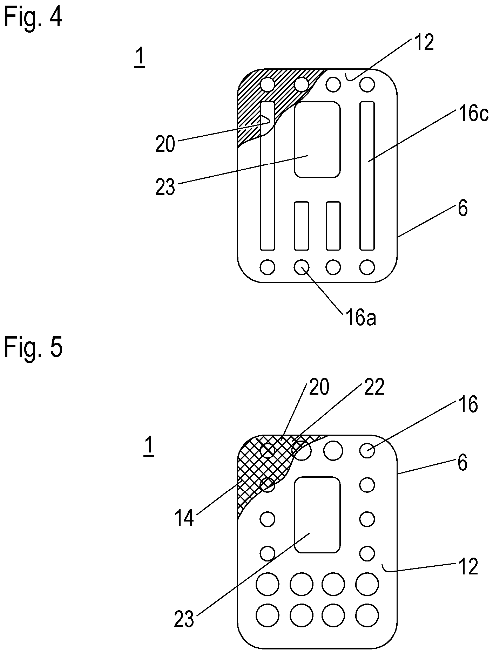

In Figur 4 ist eine Rückansicht (hintere Draufsicht) eines vierten Ausführungsbeispiels des erfindungsgemäßen Sandwichelements 1 gezeigt. Es stellt eine Kombination von sacklochartigen Vertiefungen 16a mit rillenartigen Vertiefungen 16d dar. Die zumindest eine hintere Decklage 14 ist wie bei dem ersten und zweiten Ausführungsbeispiel mit einem korrespondierenden Öffnungsmuster aus runden Öffnungen 20 und länglichen Öffnungen versehen.

In Figur 5 ist eine Rückansicht (hintere Draufsicht) eines fünften Ausführungsbeispiels des erfindungsgemäßen Sandwichelements gezeigt. Der Schaumkern 6 weist ein Vertiefungsmuster bestehend aus einer Vielzahl von rückwärtigen Vertiefungen 16 wie das erste Ausführungsbeispiel auf. Im Unterschied zu sämtlichen vorgenannten Ausführungsbeispielen nach den Figuren 1, 2, 3 und 4 ist die zumindest eine hintere Decklage 14 des vierten Ausführungsbeispiels netzartig bzw. perforiert ausgeführt. Hierdurch weist die hintere Decklage 14 eine Vielzahl von Netzmaschen bzw. Perforationen als Öffnungen 20 auf, die einen kleinen Öffnungsquerschnitt als die Vertiefungen 16 haben. Durch die Vielzahl von Netzmaschen bzw. Perforationen in Kombination mit den sie bildenden dünnen Stegen 22 können die Vertiefungen 16 mündungsseitig dennoch als vollständig geöffnet angesehen werden. Je nach Oberflächenstruktur der Rückwand 16 können die Netzmachen auch größer als die Mündungsbereiche der Vertiefungen 16 sein.

Es sei erwähnt, dass, auch wenn nicht illustriert, Merkmale der einzelnen Ausführungsbeispiel miteinander kombiniert werden können.

Offenbart sind ein Sandwichelement mit einem Schaumkern, der an seinen zueinander entgegengesetzten Großflächen zumindest jeweils eine Decklage aufweist, wobei in die eine Großfläche des Schaumkern Vertiefungen eingebracht sind und die zumindest eine sich über diese Großfläche erstreckende Decklage mit Öffnungen versehen ist, die sich zumindest teilweise in Überdeckung mit den Vertiefungen befinden, ein Herstellungsverfahren sowie ein Kabinenelement.

### Bezugszeichenliste

- 1: Sandwichelement
- 2: Flugzeugkabine
- 4: Rückraum
- 5: Schallschutzelement
- 6: Schaumkern
- 8: Großfläche (hier: Vorderseite)
- 10: vordere Decklage
- 12: Großfläche (hier: Rückseite)
- 14: hintere Decklage
- 16: Vertiefung
- 18: Schallquelle
- 20: Öffnung
- 22: Innenwandung
- 23: Fensterausschnitt
- 24: Steg

## Patentansprüche

1. Sandwichelement (1) mit einem Schaumkern (6), der an seinen zueinander entgegengesetzten Großflächen (8, 12) zumindest jeweils eine Decklage (10, 14) aufweist, wobei in die eine Großfläche (12) des Schaumkern (6) Vertiefungen (16) eingebracht sind und die zumindest eine sich über diese Großfläche (12) erstreckende Decklage (14) mit Öffnungen (20) versehen ist, die sich zumindest teilweise in Überdeckung mit den Vertiefungen (16) befinden.

2. Sandwichelement nach Patentanspruch 1, wobei ein Öffnungsmuster der zumindest einen Decklage (14) gleich einem Vertiefungsmuster des Schaumkern (6) ist und zu diesem fluchtend ausgerichtet ist.

3. Sandwichelement nach Patentanspruch 1, wobei die zumindest eine Decklage (14) netzartig bzw. perforiert ist.

4. Sandwichelement nach einem der vorhergehenden Patentansprüche, wobei innerhalb eines Schaumkerns (6) die Vertiefungen (16) unterschiedliche Formen, Größen und/oder Tiefen haben.

5. Sandwichelement nach einem der vorhergehenden Patentansprüche, wobei der Schaumkern (6) im Bereich der Vertiefungen (16) offenporig bzw. grobporig ist.

6. Sandwichelement nach einem der vorhergehenden Patentansprüche, wobei der Schaumkern (6) Zonen mit unterschiedlichen Dichten aufweist.

7. Sandwichelement nach einem der vorhergehenden Patentansprüche, wobei die Decklagen (10, 14) die gleiche Werkstoffbasis wie der Schaumkern (6) haben.

8. Verfahren zur Herstellung eines Sandwichelements nach einem der vorhergehenden Patentansprüche, wobei die Vertiefungen (16) durch ein spanabhebendes Verfahren in den ausgehärteten Schaumkern (6) eingebracht werden oder integral bei der Herstellung des Schaumkerns (6).

9. Kabinenelement eines Flugzeugs mit einem Sandwichelement (1) nach einem der Patentansprüche 1 bis 7, wobei die Vertiefungen (16) zur Primärstruktur des Flugzeugs hin zumindest abschnittsweise geöffnet sind.
